# EUROPÄISCHE PATENTSCHRIFT

(11) **EP 0 252 215 B1**
(45) Veröffentlichungstag und Bekanntmachung des Hinweises auf die Patenterteilung: **02.03.1994**
(21) Anmeldenummer: 87103625.7
(22) Anmeldetag: 12.03.1987
(51) Int. Cl.: H04N 5/262

(54) **Verfahren zur gleichzeitigen Darstellung mindestens zweier zeitlich nacheinander ablaufender Ereignisse im TV sowie Vorrichtung zur Durchführung des Verfahrens**
Process for simultaneous representation of at least two successive events in TV and arrangement for the realization of the process
Procédé de représentation simultanée d'au moins deux événements consécutifs en TV et dispositif de réalisation du procédé

(30) Priorität: 05.07.1986 DE 3622618
(43) Veröffentlichungstag der Anmeldung: 13.01.1988
(73) Patentinhaber: Bogner, Willy, D-81673 München (DE)
(72) Erfinder: Bogner, Willy, D-81673 München (DE)
(74) Vertreter: Hafner, Dieter, Dr.rer.nat., Dipl.-Phys.

(56) Entgegenhaltungen:
- GB-A- 1 387 287
- US-A- 3 959 815
- US-A- 4 399 462

## Beschreibung

Die Erfindung betrifft ein Verfahren zur gleichzeitigen Darstellung mindestens zweier zeitlich nacheinander ablaufender Ereignisse mit den weiteren Merkmalen des Anspruches 1. Ferner betrifft die Erfindung eine Vorrichtung zur Durchführung dieses Verfahrens.

Nach dem Oberbegriff des Verfahrensanspruches 1 soll das Verfahren insbesondere bei Sportereignissen verwendet werden, die in form von Rennläufen, nämlich Skirennen, Bobrennen, Eisschnelläufen oder auch Sprungläufen (Skispringen, Weitspringen, Stabhochsprung) stattfinden. Dabei ist es bereits bekannt, zeitlich nacheinander ablaufende Ereignisse aufzuzeichnen und über eine sogenannte Schnittbilddarstellung (Splitscreen) gleichzeitig darzustellen. Um den Ablauf der gleichzeitig dargestellten Ereignisse weitgehend zu synchronisieren, wird dabei versuchsweise einer der beiden Bildspeicher, der meist in Form eines Videobandes vorliegt, solange vor- oder zurückgespult, bis die beiden Ereignisse im wesentlichen parallel nebeneinander gleichzeitig ablaufen können. Durch ein derartiges Vorgehen ist es bereits möglich, durch Aufzeichnung künstlich parallelisierte Vorgänge, beispielsweise Skirennläufe miteinander zu vergleichen und z.B. festzustellen, in welchem Streckenabschnitt oder an welchem Tor ein Fahrer Fehler gemacht hat, die sich als Zeitverlust bemerkbar gemacht haben.

Trotz dieser bestehenden Vergleichsmöglichkeit ist das bekannte Vorgehen insofern nachteilig, als eine wirklich exakte Parallelisierung, wie sie zum Vergleich relativ schneller Vorgänge notwendig ist, von Hand nicht erzielbar ist und die bekannte Vorgehensweise immer nur im Nachhinein, d.h. nach Aufzeichnung der Sportveranstaltung möglich ist.

Aus der Zeitschrift "Funk-Technik", Band 40 (1985), Heft 10, Seiten 409 und 410 geht ein Fernsehgerät zur Wiedergabe mehrer Videosignale hervor. Gleichzeitig können zwei zeitlich nacheinander ablaufende Ereignisse, nämlich ein aktuelles Fernsehprogramm und Videoaufzeichnungen auf einem Bildschirm wiedergegeben werden. Allerdings legt diese Druckschrift nicht nahe, Ereignisse gleicher Art parallel oder zeitsynchron auf dem Bildschirm darzustellen.

Aus US-A-4,399,462 ist ferner bekannt, mehrere vorabgespeicherte Ereignisse elektronisch zu komprimieren und in split-screen - Technologie unter Zwischenspeicherung darzustellen.

Der Erfindung liegt die Aufgabe zugrunde, ein Verfahren sowie eine Vorrichtung dazu anzugeben, die es ermöglichen, Sportereignisse der vorbezeichneten Art für Fernsehzuschauer interessanter und aussagekräftiger zu gestalten sowie für den Sportler und Betreuer eine mögichst frühzeitige und exakte Vergleichsmöglichkeit einzelner Renn-oder Sprungläufe zu schaffen. Diese Aufgabe wird durch die kennzeichnenden Merkmale des Verfahrensanspruches 1 gelöst, vorteilhafte Weiterbildungen des Verfahrens finden sich in den Unteransprüchen 2-12. Eine Vorrichtung zur Durchführung des Verfahrens ist in den Ansprüchen 13-19 gekennzeichnet.

Als Kern der Erfindung wird es angesehen, ein Sportereignis dadurch zu aktualisieren, daß neben dem Liveereignis, das über eine Fernsehanlage dargestellt sowie aufgezeichnet und gegebenenfalls übertragen wird, ein bereits vorher aufgezeichneter Rennlauf oder Sprunglauf in exakt zeitlich oder räumlich parallelisierter Darstellung eingeblendet wird. So ergibt sich beispielsweise bei einem live-übertragenen Skislalom ein elektronischer Parallelslalom, wobei zu dem gerade ablaufenden Liveereignis vorteilhafterweise immer die jeweils bis dahin geltende Bestzeitlauf dargestellt wird. So hat der Betrachter die Möglichkeit, den gerade fahrenden Läufer optisch an dem jeweils Besten zu messen und du beobachten, wie der eine Läufer gleichsam dem Anderen "davonfährt". Unterschiede werden somit nicht nur als Zeitangaben, sondern als visuelle Entfernungs-Differenz sichtbar, wie dies auch bei einem echten Live-Parallel-Slalom der Fall ist. Hierbei ist es bedeutungsvoll, daß der Mensch nicht in der Lage ist, allein anhand von Zeitangaben genaue Vergleiche anzustellen. Viel einfacher und angenehmer ist es für das menschliche Auge, optische Wegstrecken - Unterschiede festzustellen und dadurch die Leistung von zwei Sportlern zu vergleichen. Vorteilhafterweise bietet darüber hinaus des erfindungsgemäße Verfahren die Möglichkeit, während des gesamten Laufes und über die gesamte Strecke auf einfache Weise festzustellen, welcher der beiden dargestellten Läufer gerade vorne ist. Anhand von Zeitangaben ist dies nur bei einer oder mehreren Zwischenzeiten oder nach dem Zieldurchgang möglich. Selbst erfahrene Sportreporter äußern sich oftmals noch während der letzten Sekunden eines Skirennlaufes über die gute Form eines Skiläufers und müssen dann nach dem Zieleinlauf anhand der gemessenen Laufzeit feststellen, daß sie sich getäuscht haben. Durch das "elektronische Parallelrennen" kann zu jeder Zeit und insbesondere in jedem Streckenabschnitt leicht festgestellt werden, welcher Läufer zurückfällt, aufholt und/oder an der Spritze liegt.

Erfindungstragender Bestandteil des Verfahrens ist, daß die wiedergebende Bildspeichervorrichtung, beispielsweise eine Bandmaschine, durch das sich bei dem Sportereignis bewegende Objekt, beispielsweise den Läufer oder einen Bob und/oder Markierungen entlang der Bewegungsbahn dieses Objektes gesteuert wird. Nur dadurch ist sichergestellt, daß die Ereignisse wirklich exakt zeitlich parallelisiert sind.

Das erfindungsgemäße Verfahren ist nicht nur auf Rennläufe anwendbar, bei welchen die Zeit gemessen wird, sondern kann mit gewissen Einschränkungen und Modifikationen auch auf Sprungläufe angewendet werden, insbesondere Skispringen, Stabhochspringen pp. Dies soll im folgenden anhand eines Skisprunglaufes verdeutlicht werden, bei dem die Weite ermittelt wird.

Bei Skispringen ist es besonders interessant, in welchen Phasen des Fluges ein Springer welche Haltung einnimmt, wie hoch er abgesprungen ist und/oder welche Anfangs-Fluggeschwindigkeit er durch eine optimierte Anlaufhaltung erreicht hat. Wird nun beispielsweise durch einen Livespringer im oberen Bereich des Anlaufes eine Startmarke ausgelöst, die eine vorherige Aufzeichnung eines Vorsprunges an exakt der gleichen Stelle startet, dann fahren (nebeneinander) zwei Springer die gleiche Schanze herunter, sodaß zunächst festgestellt werden kann, wer zuerst vom Schanzentisch abspringt (damit ist ein Maß für die Anlaufgeschwindigkeit gegeben), sodann läßt sich durch die Paralleldarstellung auf einfache Weise analysieren, welcher Springer zuerst in eine optimale Fluglage kommt, wie hoch er über der Piste schwebt, wann er "zur Landung aufmacht" und wo er aufspringt. Mithin lassen sich alle Flugphasen laufend und unmittelbar miteinander vergleichen, wodurch dieselben Vorteile wie bei einem Rennlauf erzielt werden.

Es ist einleuchtend, das immer nur ein Liveereignis mit einem im Bildspeicher vorab gespeicherten Ereignis gleicher Art parallelisiert dargestellt werden kann. Unter Ereignissen gleicher Art sind solche zu verstehen, die sich auf dieselbe Sportart, denselben Streckenabschnitt und in etwa denselben Bewegungsablauf beziehen. Es ist nicht sinnvoll, das erfindungsgemäße Verfahren auf Ereignisse anzuwenden, die diesen Forderungen nicht genügen.

Wenn im Kennzeichen des Anspruches 1 auch davon gesprochen wird, daß die Ereignisse räumlich parallelisiert dargestellt werden, so ist darunter zu verstehen, daß die Ablaufgeschwindigkeit des Bildspeichers im Wiedergabemodus, beispielsweise die Wiedergabegeschwindigkeit eines Videobandes so gesteuert (beschleunigt oder verzögert) wird, daß beide Läufer sich bei der elektronischen Paralleldarstellung laufend im exakt selben Streckenabschnitt bewegen. Dadurch ist es zwar nicht mehr möglich, aus der Paralleldarstellung Informationen darüber zu gewinnen, welcher Läufer beispielsweise vorne oder hinten liegt, jedoch ergibt sich insbesondere für Trainer und Betreuer die Möglichkeit, das Laufverhalten unterschiedlicher Läufer an exakt den gleichen Streckenpunkten miteinander zu vergleichen. Eine wertvolle Hilfestellung bietet hier eine elektronische Standbildvorrichtung, die so ausgebildet ist, daß sowohl das Liveereignis als auch das wiedergegebene Ereignis aus der Vergangenheit nebeneinander an exakt der gleichen Stelle eingefroren werden können (freeze frame-Betriebsart).

Gemäß Anspruch 2 soll der zeitlich synchrone und/oder räumlich parallele Ablauf entweder durch Markierungen entlang der Bewegungsbahn oder durch das sich bewegende Objekt des Sportereignisses (dies kann ein Läufer, ein Springer oder auch ein Bob sein) gesteuert werden. Unter Steuerung ist hier zu verstehen, daß entweder das Sportereignis an mehreren Stellen erneut dadurch zeitlich synchronisiert oder parallelisiert wird, daß beide Läufer beispielsweise an einer Zwischenzeitmarke künstlich nebeneinander gesetzt werden, um zu sehen, welcher Läufer dem anderen im zweiten Streckenabschnitt davonfährt oder durch eine Vielzahl von Einzelmarken, die der Läufer oder Bob bei seinem Lauf auslöst, überdeckt oder auf sonstige Weise aktualisiert, der wiedergebende Bildspeicher bezüglich seiner Wiedergabegeschwindigkeit gesteuert, d.h. beschleunigt oder gebremst wird, wodurch über die gesamte Strecke beide Läufer exakt parallel an gleichen Streckenpunkten zu gleicher Zeit auf dem/den Bildschirmen zu sehen sind, obwohl der eine Läufer sehr viel schneller als der andere fährt oder gefahren ist (Ansprüche 2-7).

Es ist möglich, entlang der Strecke Muster (Barcode-Muster) vorzusehen, die beim Schwenken der Kamera analysierbar und lokalisierbar sind und insbesondere zur Signalabgabe geeignet sind, sobald ein Läufer den entsprechenden Barcode überdeckt. Eine Vielzahl solcher Barcode-Muster, die beispielsweise äquidistant über die Strecke verteilt sind, ist somit geeignet, in Verbindung mit dem sich bewegenden Objekt den wiedergebenden Bildspeicher zum Zwecke der zeitlichen Synchronisation oder räumlichen Parallelisierung zu steuern (zu beschleunigen oder zu bremsen).

Die erfindungsgemäße Vorrichtung ist anhand eines in der Zeichnungsfigur dargestellten Ausführungsbeispieles näher erläutert. Die Zeichnungsfigur zeigt ein
Blockschaltbild mit den erfindungswesentlichen Baugruppen.

Die in der Zeichnungsfigur dargestellte Vorrichtung 10 besteht zunächst aus einem Fersehaufzeichnungs- und Übertragungssystem, bestehend aus einer Mehrzahl von Videokameras 12 (I,II,III), die über Kameraleitungen 14 an eine Regiezentrale 16 angeschlossen sind, die ein Mischpult 18 zum Mischen und Schneiden der eingehenden Signale enthält. An der Regiezentrale ist weiterhin eine manuelle Eingabevorrichtung in Form einer Tastatur 20 angeschlossen, durch welche alphanumerische Information betreffend das Sportereignis dem Videosignal überlagert werden kann.

Über eine Umschaltvorrichtung 22 ist die Regiezentrale 16 ferner mit einer Mehrzahl von Bildspeichern 24 in Form mehrerer Bandgeräte verbunden, die zum Zwecke der Unterscheidung mit der Unter-Ziffern I-IV versehen sind. Die zwischen den Bildspeichern 24, der Umschaltvorrichtung 22 und dem Mischpult 18 verlaufenden Signalleitungen 26,28 sind so ausgebildet, daß sie als Zweiwegleitungen dienen können, so daß die Signale von der Regiezentrale zu den Speichern und wieder zurück übertragen werden können. Die Umschaltvorrichtung hat den Zweck, die vom Mischpult ausgehenden Videosignale an einen (oder auch mehrere) der Bildspeicher 24(I-IV)zu übertragen und/oder von einem der Bildspeicher 24(I-IV) kommende Signale gezielt in das Mischpult 18 einzuspielen. Zu diesem Zwecke ist die Umschaltvorrichtung 22 mit einer Steuerungs- und Auswahleinrichtung 30 verbunden, die entweder über die Leitung 32 unmittelbar von der Regiezentrale 16 aus gezielt gesteuert werden kann oder über einen Rechner-Vergleicher 34 angesteuert wird, der die Umschaltung der Bildspeicher 24 abhängig von durch eine elektronische Zeitnahme 36 ermittelten Laufzeiten steuert. Diese Steuerung geht so vorsich, daß beispielsweise der Bildspeicher 24 (I) solange immer wieder neue Läufe oder Sprünge aufzeichnet, und der Bildspeicher 24 (II) solange an die Regiezentrale immer wieder den bereits gespeicherten derzeit gültigen Bestzeitlauf überspielt, bis dieser Bestzeitlauf von einem neuen (Live-Bestzeitlauf) abgelöst wird. Dann wird der auf dem Bildspeicher (I) aufgezeichnete neue Bestzeitlauf solange parallel zu Liveereignissen, die auf den Bildspeicher 24 (II) aufgezeichnet werden wiedergegeben, bis der Rechner/Vergleicher 34 eine erneute Bestzeit feststellt und die Umschaltvorrichtung 22 aktiviert. Dies bedeutet, daß über die Signalleitungen 28 nicht nur die Videosignale an die Bildspeicher 24 gegeben, sondern auch die Betriebsartsignale, die festlegen, ob die Bildspeicher in der Aufzeichnungs- oder Wiedergabe-Betriebsart arbeiten.

Ferner ist bedeutungsvoll, daß auf den Bildspeichern 24 das von der elektronischen Zeitnahme 36 abgegebene Startsignal als Wiedergabe-Startsignal aufgezeichnet wird, von dem die jeweilige Wiedergabe gestartet wird, um einen zeitsynchronen Parallellauf von Liveereignis und aufgezeichnetem Ereignis zu gewährleisten. Die entsprechende Ansteuerung der Bildspeicher 24 (I) bis 24 (IV) erfolgt über den Rechner/Vergleicher 34 und über die Steuerungs- und Auswahleinrichtung 30, von der eine gemeinsame Startsignalleitung 38 zu den Bildspeichern 24 (I) bis 24 (IV) führt.

Die weiteren Bildspeicher 24 (III) und 24 (IV) dienen beispielsweise zur gleichzeitigen Aufzeichnung der sich auf Teilstrecken während derselben Veranstaltung abspielenden Ereignisse, wobei über die Signalleitungen 28 in gleicher Weise wie zu den Bildspeichern 24 (I) und 24 (II) sowohl die Videosignale als auch die Betriebsart-Signale zu den Bildspeichern 24 (III) und 24 (IV) geleitet werden.

Mit 40 ist noch eine Mehrzahl von Signalgebern bezeichnet, die von den Läufern oder Springern bei Start, Zwischenzeit oder Ziel ausgelöst werden. Diese Signalgeber können in ansich bekannter Weise eine Lichtschranke oder eine mechanische Startschranke sein.

Mit 42 ist noch ein TV-Sender bezeichnet, mit 44 ein Monitor und mit 46 eine der elektronischen Zeitnahme 36 nachgeschaltete Anzeigetafel. Derartige Elemente gehören zum allgemeinen Stand der Technik.

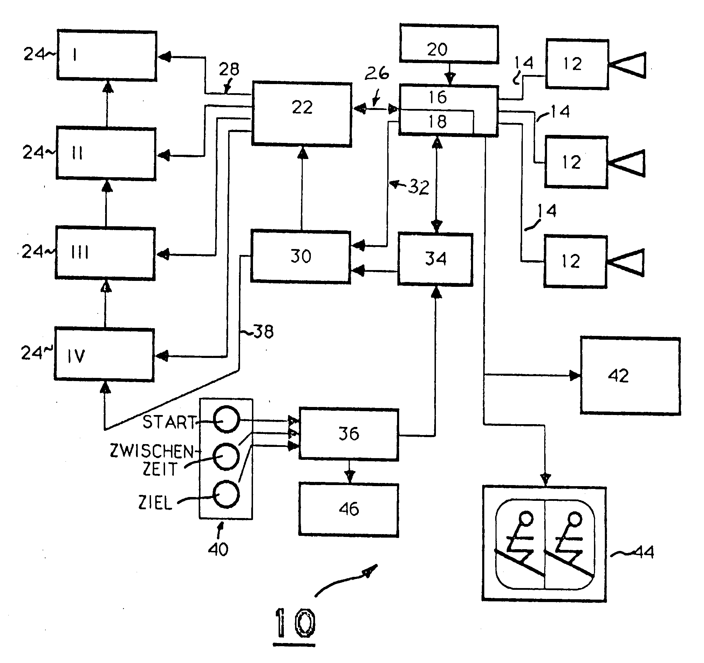

## Patentansprüche

1. Verfahren zur gleichzeitigen Darstellung mindestens zweier zeitlich nacheinander ablaufender Sportereignisse in Form von Rennläufen (Skirennen, Bobrennen, Eisschnellauf) oder Sprungläufen (Skisprung, Weitsprung, Stabhochsprung), auf nebeneinanderliegenden Bildflächen (mindestens einem Bildschirm), wobei die Ereignisse über eine Videovorrichtung mindestens abschnittsweise in mindestens einem Bildspeicher (Band, Platte, Festspeicher) abgespeichert werden, dad. gek. daß eines der dargestellten Ereignisse ein Liveereignis ist, und
**dadurch gekennzeichnet**,
daß gleichzeitig mit der Direktdarstellung und/oder Übertragung des Liveereignisses mindestens ein weiteres, in dem Bildspeicher vorabgespeichertes Ereignis gleicher Art durch elektronische Schaltvorgänge zeitlich synchron und/oder durch kontinuierliche oder diskontinuierliche Beschleunigung oder Verzögerung der Ablaufgeschwindigkeit des Bildspeichers räumlich parallelisiert dargestellt wird, wobei der Start des Bildspeicherablaufes durch ein sich bewegendes Objekt des Ereignisses (Rennläufer, Bob, Springer) gesteuert wird.

2. Verfahren zur gleichzeitigen Darstellung mindestens zweier zeitlich nacheinander ablaufender Sportereignisse in Form von Rennläufen (Skirennen, Bobrennen, Eisschnellauf) oder Sprungläufen (Skisprung, Weitsprung, Stabhochsprung), auf mindestens zwei getrennten Bildschirmen, wobei die Ereignisse über eine Videovorrichtung mindestens abschnittsweise in mindestens einem Bildspeicher (Band, Platte, Festspeicher) abgespeichert werden, dad. gek. daß eines der dargestellten Ereignisse ein Liveereignis ist, und
daß gleichzeitig mit der Direktdarstellung und/oder Übertragung des Liveereignisses mindestens ein weiteres, in dem Bildspeicher vorabgespeichertes Ereignis gleicher Art durch elektronische Schaltvorgänge zeitlich synchron und/oder durch kontinuierliche oder diskontinuierliche Beschleunigung oder Verzögerung der Ablaufgeschwindigkeit des Bildspeichers räumlich parallelisiert dargestellt wird.

3. Verfahren nach Anspruch 1 oder 2,
dadurch gekennzeichnet,
daß der zeitlich synchrone und/oder räumlich parallele Ablauf durch ein sich bewegendes Objekt des Ereignisses (Rennläufer, Bob, Springer) und/oder Markierungen entlang der Bewegungsbahn dieses Objektes gesteuert wird.

4. Verfahren nach Anspruch 3,
dadurch gekennzeichnet,
daß der Ablauf des im Bildspeicher vorabgespeicherten Ereignisses gleichzeitig zum Liveereignis an vorgewählten Streckenabschnitten jeweils neu zeitlich synchronisiert wird.

5. Verfahren nach Anspruch 1 oder 2
dadurch gekennzeichnet,
daß das vorabgespeicherte Ereignis ohne Berücksichtigung der Ablaufzeit durch mehrmaliges Starten des Bildspeicherablaufes an vorgewählten Bildspeicherstellen räumlich neu parallelisiert wird.

6. Verfahren nach Anspruch 1 oder 2
dadurch gekennzeichnet,
daß die räumliche Parallelisierung der beiden dargestellten Ereignisse durch kontinuierliches Nachregeln der Bildspeicherwiedergabegeschwindigkeit erfolgt.

7. Verfahren nach Anspruch 4,
dadurch gekennzeichnet,
daß die Regelung der Bildspeicherwiedergabegeschwindigkeit abhängig von Markierungen entlang der Bewegungsbahn des Objektes erfolgt, die bei der Aufzeichnung des Ereignisses an der Bildinformation eindeutig zugeordneter Stelle im/auf dem Bildspeicher als Regelungsmarkierung festgehalten sind.

8. Verfahren nach Anspruch 5,
dadurch gekennzeichnet,
daß die Identifizierung der Speicherstellen, an denen die Bildspeicherwiedergabe abschnittsweise neu gestartet wird, durch Markierungen entlang der Bewegungsbahn des Objektes erfolgt, die bei der Aufzeichnung des Ereignisses an der Bildinformatin eindeutig zugeordneter Stelle im/auf dem Bildspeicher als Neu-Startmarkierungen festgehalten sind.

9. Verfahren nach Anspruch 7 und/oder Anspruch 8,
dadurch gekennzeichnet,
daß die Markierungen durch ein Erfassungsgerät, insbesondere eine Videokamera erfaßt, durch ein dem Erfassungsgerät nachgeschaltetes Rechnersystem ausgewertet, und der Aufzeichnung an der Bildinformation eindeutig zugeordneter Stelle zugeordnet werden.

10. Verfahren nach Anspruch 9,
dadurch gekennzeichnet,
daß die Markierungen Barcode-Muster sind.

11. Verfahren nach einem der Ansprüche 1 - 4,
dadurch gekennzeichnet,
daß die Zeitsynchronisation durch elektrische Start- oder Zwischenzeitsignale oder Markierungen erfolgt, die von dem zeitlichen, weg- oder weitenmäßig erfaßten Objekt ausgelöst und zusammen mit dem Bildsignal als Aufzeichnungsstartmarke abgespeichert werden.

12. Verfahren nach einem der vorhergehenden Ansprüche,
dadurch gekennzeichnet,
daß zeitparallel zum Liveereignis der Zeit-und/oder Bewegungsablauf des bis dahin jeweils Schnellsten bzw. Weitesten dargestellt (eingespielt) wird.

13. Verfahren nach einem der vorhergehenden Ansprüche,
dadurch gekennzeichnet,
daß die ursprüngliche zeitliche Synchronisation (Start-Abschnittssynchronisation) solange aufrechterhalten wird, bis durch Ablaufzeitmessung (insbesondere Laufzeitmessung bei Skiläufern) beider Ereignisse bei einer Zwischenzeitstoppung an festgelegter oder beliebiger Stelle der Bewegungsbahn eine voreinstellbare Zeitdifferenz festgestellt wird.

14. Vorrichtung zur Durchführung des Verfahrens nach einem der vorhergehenden Ansprüche, mit mindestens einer elektronischen Bildaufnahmeeinrichtung (Videokamera), mindestens einer Bildfläche (Bildschirm), mindestens zwei Bildspeichern (Band, Bildplatte, Festspeicherbereich) zur Aufzeichnung und Wiedergabe des aufgenommenen Ereignisses sowie einer Steuerungs- und Auswahleinrichtung,
dadurch gekennzeichnet,
daß die Steuerungs- und Auswahleinrichtung mit mindestens einer entlang der Bewegungsbahn des sich bei dem Ereignis bewegenden Objektes angeordneten Schaltmarke verbunden ist, derart, daß beim Ansprechen der Schaltmarke der Ablauf mindestens zweier Bildspeicher gestartet wird, wobei ein erster Bildspeicher in eine Wiedergabe-Betriebsart schaltbar ist und ein bereits aufgezeichnetes Ereignis wiedergibt und das gleichzeitig damit wiedergegebene Liveereignis in einem zweiten Bildspeicher in einer Aufnahmebetriebsart eingelesen wird, wobei das durch die Schaltmarke ausgelöste elektrische Signal als Wiedergabe-Startsignal auf dem in der Aufnahme-Betriebsart befindlichen Bildspeicher abgespeichert oder aufgezeichnet wird.

15. Vorrichtung nach Anspruch 14,
dadurch gekennzeichnet,
daß die Startmarke als Lichtschranke oder mechanische Startschranke ausgebildet ist.

16. Vorrichtung nach einem der vorhergehenden Ansprüche,
dadurch gekennzeichnet,
daß die Schaltmarke als Barcode-Muster ausgebildet ist, das von einer als Videokamera ausgebildeten elektronischen Aufnahmeeinrichtung erfaßt, einem Rechner übertragen und von diesem als Startimpuls der Steuerungs- und Auswahleinrichtung zugeleitet wird.

17. Vorrichtung nach einem der vorhergehenden Ansprüche,
dadurch gekennzeichnet,
daß mit einem Rechner in ansich bekannter Weise eine elektrische Zeitnahmevorrichtung verbunden ist, die eine automatische Zeitvergleichsvorrichtung enthält und die Steuerungs- und Auswahleinrichtung derart mit dem Ausgang der Zeitvergleichsvorrichtung verbunden ist, daß der gerade aufgezeichnete und der gerade wiedergegebene Bildspeicher solange in dieser eingestellten Betriebsart verbleiben, bis die Zeitvergleichsvorrichtung eine neue Bestlaufzeit bei einem Liveereignis feststellt, wodurch die Betriebsarten der Bildspeicher umkehrbar sind (Aufnahme → Wiedergabe, Wiedergabe → Aufnahme).

18. Vorrichtung nach einem der vorhergehenden Ansprüche,
dadurch gekennzeichnet,
daß der wiedergebende Bildspeicher nach erfolgter Wiedergabe eines Ereignisses von der Steuervorrichtung automatisch auf die durch das Wiedergabe-Startsignal gekennzeichnete Speicherstelle zurückgesetzt oder zurückgespult wird.

19. Vorrichtung nach einem der vorhergehenden Ansprüche,
dadurch gekennzeichnet,
daß eine Eingabe-Codierungsvorrichtung (Tastatur) mit der Steuerungs- und Auswahlvorrichtung in Verbindung steht, über welche bei der Aufnahmebetriebsart das Ereignis betreffende alphanumerische Information zusammen mit der Bildinformation aufgezeichnet wird.

20. Vorrichtung nach einem der vorhergehenden Ansprüche,
gekennzeichnet durch
eine Standbildvorrichtung (freeze frame-Einrichtung) die entweder die beiden parallel vorliegenden Bildsignale (Livesignal, Wiedergabesignal) zur Standbilderzeugung in einem gesonderten Speicher zwischenspeichert oder den Ablauf beider Bildspeicher stoppt und die in beiden Speichern vorliegende, bereits aufgezeichnete Information als Standbild darstellt.

## Claims

1. A method of simultaneously depicting on adjacently disposed image surfaces (at least one screen), at least two sport events which take place one after the other in time, in the form of races (ski racing, bobsleigh racing, speed ice skating) or jumps (ski jumping, broad or long jump, high jump), the events being stored by at least one video device and at least portionwise in at least one image storage means (tape, disc, fixed-disc memory), characterised in that one of the displayed events is a live event and characterised in that at the same time as the direct showing and/or transmission of the live event, at least one further event of the same type stored beforehand in the image storage means is shown spatially in parallel by electronic circuitry synchronised in time and/or by continuous or intermittent acceleration or deceleration of the running speed of the image storage means, the start of image storage means playback being controlled by a moving object within the event (racers, bobsleigh, jumper).

2. A method of simultaneously depicting on at least two separate image screens at least two sport events which take place one after the other in time, in the form of races (ski racing, bobsleigh racing, speed ice skating) or jumps (ski jumping, broad or long jump, high jump), the events being stored by at least one video device and at least portionwise in at least one image storage means (tape, disc, fixed-disc memory), characterised in that one of the events depicted is a live event and in that simultaneously with the direct showing and/or transmission of the live event, at least one further event of the same type stored beforehand in the image storage means is shown spatially in parallel by electronic circuitry synchronised in time and/or by continuous or intermittent acceleration of deceleration of the running speed of the image storage means.

3. A method according to claim 1 or 2, characterised in that the time-dependently synchronised and/or spatially parallel playback is controlled by a moving object within the event (racer, bobsleigh, jumper) and/or markings along the path of movement of the said object.

4. A method according to claim 3, characterised in that the playback of the event previously stored in the image storage means is always synchronised afresh in time at preselected portions of its length and simultaneously with the live event.

5. A method according to claim 1 or 3, characterised in that disregarding the playback time, the previously stored event is spatially freshly co-ordinated in parallel by repeated starting of the stored image playback at preselected places in the image memory.

6. A method according to claim 1 or 2, characterised in that the spatially parallel co-ordination of the two depicted events takes place by continuously readjusting the playback speed of the image storage means.

7. A method according to claim 6, characterised in that regulating the image storage means playback speed takes place as a function of markings along the path of movement of the object, said markings being retained as regulating markings upon recording of the event at locations in/on the image storage means which are clearly associated with the video data.

8. A method according to claim 5, characterised in that identification of the storage locations at which the playback of the stored images is re-started portion by portion is carried out by markings along the path of movement of the object, the markings being retained as fresh start markings at the time of recording at locations in/on the image storage means which are clearly associated with the event on the video data.

9. A method according to claim 7 and/or claim 8, characterised in that the markings are discerned by an acquisition device, particularly a video camera, are evaluated by a computer system downstream of the acquisition unit and are associated with a location clearly associated with the recording on the video data.

10. A method according to claim 9, characterised in that the markings are bar code patterns.

11. A method according to one of claims 1 to 4, characterised in that the time-related synchronisation takes place by means of electrical start or intermediate time signals or markings which are triggered by the object detected in relation to time, path or size and are stored as a recording starting mark together with the video signal.

12. A method according to one of the preceding claims, characterised in that the time and/or movement related playback of the until then fastest or farthest is shown (played) at the same time as the live event.

13. A method according to one of the preceding claims, characterised in that the original time-related synchronisation (start portion synchronisation) is maintained until such time as a preadjustable time differential is established at an intermediate stop at a fixed or any desired location on the movement path by measurement of the playing time (in particular measurement of the running time in the case of skiers) of both events.

14. A device for carrying out the method according to one of the preceding claims, with at least one electronic image recording means (video camera), at least one image area (image screen), at least two image storage means (tape, video disc, fixed disc memory area) for recording and playing back the recorded event and with a controlling and selecting means, characterised in that the controlling and selecting means are connected to at least one switching mark disposed along the path of movement of the object moving during the event so that when the switching mark responds the playback of at least two image storage means is started, a first image storage means being adapted to be switched to a playback mode and an already recorded event is played back simultaneously therewith, the live event being read into a second image storage means in recording mode, the electrical signal triggered by the switching mark being stored or recorded as a playback start signal on the image storage means which is in the recording mode.

15. A device according to claim 14, characterised in that the start mark takes the form of a light barrier or mechanical start barrier.

16. A device according to one of the preceding claims, characterised in that the switching mark takes the form of a bar code pattern which is scanned by an electronic recording device constructed as a video camera, transmitted to a computer whence it is fed as a starting pulse to the controlling and selecting means.

17. A device according to one of the preceding claims, characterised in that connected to a computer in per se known manner is an electrically operated timing device which contains an automatic time comparator, the controlling and selecting means being so connected to the output from the time comparator that the just recorded and just played back image storage means remain in the preset mode until the time comparator establishes a new best time in a live event, so that the modes of the image storage means can be reversed (record playback, playback record).

18. A device according to one of the preceding claims, characterised in that the image storage means which is in playback mode, once playback of an event is completed, is automatically reset or wound back to the place in the memory which is identified by the playback start signal.

19. A device according to one of the preceding claims, characterised in that an input coding device (keyboard) is connected to the controlling and selecting means by which, during recording mode, alphanumeric data relating to the event are recorded together with the video data.

20. A device according to one of the preceding claims, characterised by a freeze frame device which in a separate storage means provides interim storage of either the two parallel image signals (live signal, playback signal) in order to generate a freeze frame or stops the progress of both image storage means and shows as a freeze frame the data already recorded and present in both storage means.

## Revendications

1. Procédé de projection simultanée, sur des surfaces de projection disposées l'une à côté de l'autre (au moins un écran), d'au moins deux événements sportifs qui se déroulent l'un après l'autre dans le temps et qui se présentent sous la forme de compétitions de vitesse (course de ski, course de bobsleigh, course de patinage de vitesse) ou de compétitions de saut (saut à skis, saut en longueur, saut à la perche), les événements étant placés en mémoire, par l'intermédiaire d'un dispositif vidéo et au moins par tranches, dans au moins une mémoire d'images (bande, disque, mémoire morte), caractérisé en ce que l'un des événements projeté est un événement se déroulant en direct et en ce que, en même temps que la projection en direct et/ou la transmission de l'événement se déroulant en direct, au moins un autre événement du même type, préenregistré dans la mémoire d'images, est projeté d'une manière synchronisée dans le temps, au moyen d'opérations électroniques de couplage, et/ou parallèlement dans l'espace, par accélération ou ralentissement, continu ou discontinu, de la vitesse de passage de la mémoire d'images, le début du passage de la mémoire d'images étant commandé au moyen d'un objet, de l'événement (coureur, bobsleigh, sauteur), qui se déplace.

2. Procédé de projection simultanée, sur au moins deux écrans séparés, d'au moins deux événements sportifs qui se déroulent l'un après l'autre dans le temps et qui se présentent sous la forme de compétitions de vitesse (course de ski, course de bobsleigh, course de patinage de vitesse) ou de compétitions de saut (saut à skis, saut en longueur, saut à la perche), les événements étant placés en mémoire, par l'intermédiaire d'un dispositif vidéo et au moins par tranches, dans au moins une mémoire d'images (bande, disque, mémoire morte), caractérisé en ce que l'un des événements projeté est un événement se déroulant en direct et en ce que, en même temps que la projection en direct et/ou la transmission de l'événement se déroulant en direct, au moins un autre événement du même type, préenregistré dans la mémoire d'images, est projeté d'une manière synchronisée dans le temps, au moyen d'opérations électroniques de couplage, et/ou parallèlement dans l'espace, par accélération ou ralentissement, continu ou discontinu, de la vitesse de passage de la mémoire d'images.

3. Procédé suivant l'une des revendications 1 et 2, caractérisé en ce que le passage synchrone dans le temps et/ou parallèlement dans l'espace est commandé au moyen d'un objet de l'événement (coureur, bobsleigh, sauteur) qui se déplace et/ou au moyen de marques disposées le long de a trajectoire de cet objet.

4. Procédé suivant la revendication 3, caractérisé en ce que le passage de l'événement préenregistré dans la mémoire d'images est chaque fois de nouveau synchronisé dans le temps, suivant des tranches de parcours présélectionnées, avec l'événement se déroulant en direct.

5. Procédé suivant la revendication 1 ou 2, caractérisé en ce que, sans tenir compte du temps de passage, l'événement préenregistré fait l'objet d'une nouvelle mise en parallèle dans l'espace au moyen de démarrages répétés du passage de la mémoire d'images en des emplacements présélectionnés de cette mémoire d'images.

6. Procédé suivant la revendication 1 ou 2, caractérisé en ce que la mise en parallèle dans l'espace des deux événements projetés s'effectue au moyen d'un réglage continu de la vitesse de restitution de la mémoire d'images.

7. Procédé suivant la revendication 6, caractérisé en ce que le réglage de la vitesse de restitution de la mémoire d'images s'effectue en fonction de marques qui sont disposées le long de la trajectoire de l'objet et qui, lors de l'enregistrement de l'événement, sont fixées, en des emplacements associés d'une manière unique aux données d'images, en tant que marque de réglage dans/sur la mémoire d'images.

8. Procédé suivant la revendication 5, caractérisé en ce que l'identification des emplacements de mémoire auxquels la restitution de la mémoire d'images fait l'objet de nouveaux démarrages par tranches s'effectue au moyen de marques qui sont disposées le long de la trajectoire de l'objet et qui, lors de l'enregistrement de l'événement, sont fixées, en un emplacement associé d'une manière unique aux données d'images, en tant que marques de nouveaux démarrages dans/sur la mémoire d'images.

9. Procédé suivant la revendication 7 et/ou la revendication 8, caractérisé en ce que les marques sont détectées au moyen d'un appareil de détection, notamment d'une caméra vidéo, sont exploitées au moyen d'un système d'ordinateur connecté en aval de l'appareil de détection et sont associées à l'enregistrement à l'emplacement associé d'une manière unique aux données d'images.

10. Procédé suivant la revendication 9, caractérisé en ce que les marques sont constituées par un motif en code barres.

11. Procédé suivant l'une des revendications 1 à 4, caractérisé en ce que la synchronisation dans le temps s'effectue au moyen de signaux électriques de démarrage ou de temps intermédiaire, ou au moyen de marques, qui sont déclenchés par l'objet enregistré dans le temps en ce qui concerne le trajet ou la distance parcourue et qui sont mis en mémoire en même temps que le signal d'image, sous la forme de marques de démarrage d'enregistrement.

12. Procédé suivant l'une des revendications précédentes, caractérisé en ce que, parallèlement dans le temps à l'événement se déroulant en direct, il est projeté (joué) le déroulement dans le temps et/ou le déroulement du déplacement de celui qui a été chaque fois jusqu'alors le plus rapide ou le plus loin.

13. Procédé suivant l'une des revendications précédentes, caractérisé en ce que la synchronisation initiale dans le temps (synchronisation des tronçons de démarrage) est maintenue jusqu'à ce qu'une différence de temps, réglable au préalable, ait été relevée au moyen d'une mesure du temps de passage (notamment une mesure du temps de course dans le cas de skieurs) des deux événements lors d'un arrêt de temps intermédiaire en un emplacement préfixé ou voulu de la trajectoire.

14. Installation de mise en oeuvre du procédé suivant l'une des revendications précédentes, comprenant au moins un dispositif de prise de vue électronique (caméra vidéo), au moins une surface de projection (écran), au moins deux mémoires d'images (bande, vidéodisque, zone de mémoire morte), servant à l'enregistrement et à la restitution de l'événement ayant fait l'objet de la prise de vue, et un dispositif de commande et d'exploitation, caractérisée en ce que le dispositif de commande et d'exploitation est relié à au moins une marque de déclenchement, disposée le long de la trajectoire de l'objet se déplaçant lors de l'événement, d'une façon telle que, lorsque la marque de déclenchement fait l'objet d'une réaction, le passage d'au moins deux mémoires d'images démarre, une première mémoire d'images pouvant être commutée en mode de fonctionnement de restitution et restituant un événement déjà enregistré, tandis que l'événement se déroulant en direct, qui est restitué en même temps que le premier événement, est lu dans une deuxième mémoire d'images dans un mode de fonctionnement de prise de vue, le signal électrique émis au moyen de la marque de déclenchement étant mis en mémoire ou enregistré, en tant que signal de démarrage de restitution, sur la mémoire d'images qui est placée dans le mode de fonctionnement de prise de vue.

15. Installation suivant la revendication 14, caractérisée en ce que la marque de déclenchement est réalisée sous la forme d'un barrage photoélectrique ou d'un barrage mécanique de démarrage.

16. Installation suivant l'une des revendications précédentes, caractérisée en ce que la marque de déclenchement est réalisée sous la forme d'un motif à code barres qui est détecté par un dispositif de prise de vue électronique réalisé sous la forme d'une caméra vidéo, est transmis à un ordinateur et est envoyé par ce dernier, sous la forme d'une impulsion de démarrage, au dispositif de commande et d'exploitation.

17. Installation suivant l'une des revendications précédentes, caractérisée en ce qu'un dispositif de chronométrage électrique est relié, d'une manière en soi connue, à un ordinateur, ce dispositif de chronométrage contenant un dispositif de comparaison automatique du temps, et en ce que le dispositif de commande et d'exploitation est relié à la sortie de ce dispositif de comparaison du temps d'une façon telle que la mémoire d'images qui est en cours d'enregistrement et celle qui est en cours de restitution demeurent dans ce mode de fonctionnement fixé, jusqu'à ce que le dispositif de comparaison de temps relève un nouveau meilleur temps de course lors d'un événement se déroulant en direct, ce qui permet d'inverser les modes de fonctionnement des mémoires d'images (prise de vue→ restitution, restitution → prise de vue).

18. Installation suivant l'une des revendications précédentes, caractérisée en ce que, une fois que la restitution d'un événement a eu lieu, la mémoire d'images qui est en mode de restitution est replacée ou réenroulée automatiquement par le dispositif de commande à l'emplacement de mémoire qui est caractérisé par le signal de démarrage de restitution.

19. Installation suivant l'une des revendications précédentes, caractérisée en ce que, au dispositif de commande et d'exploitation, est relié un dispositif de codage d'introduction de données (clavier) par l'intermédiaire duquel, en mode de fonctionnement de prise de vue, des données alphanumériques concernant l'événement sont enregistrées en même temps que les données d'images.

20. Installation suivant l'une des revendications précédentes, caractérisée par un dispositif d'image fixe (dispositif dit "freeze frame") qui soit procède à une mise en mémoire intermédiaire, dans une mémoire spéciale, des deux signaux d'image existant en parallèle (signal en direct, signal de restitution), en vue de la production d'une image fixe, soit interrompt le passage des deux mémoires d'images et projette, sous la forme d'une image fixe, les données déjà enregistrées contenues dans les deux mémoires.
